Europäisches Patentamt

European Patent Office

Office européen des brevets

(19)

(11) Numéro de publication : **0 280 940 B1**

(12) **FASCICULE DE BREVET EUROPEEN**

(45) Date de publication du fascicule du brevet :
27.03.91 Bulletin 91/13

(51) Int. Cl.$^5$ : **G21B 1/00, H05H 1/12**

(21) Numéro de dépôt : 88102002.8

(22) Date de dépôt : 11.02.88

(54) Diverteur-collecteur d'un réacteur nucléaire à fusion du type tokamak.

(30) Priorité : 16.02.87 LU 86778

(43) Date de publication de la demande :
07.09.88 Bulletin 88/36

(45) Mention de la délivrance du brevet :
27.03.91 Bulletin 91/13

(84) Etats contractants désignés :
BE DE ES FR GB GR IT LU NL

(56) Documents cités :
PROCEEDINGS OF THE 11th SYMPOSIUM ON FUSION ENGINEERING, Austin, Texas, 18 - 22 novembre 1985, vol. 2, pages 928-931, IEEE; F. BROSSA et al.: "Experimental testing and theoretical analysis of samples of a divertor plate proposed for NET"

(56) Documents cités :
JOURNAL OF VACUUM SCIENCE & TECHNO-LOGY A, vol. 3, no. 3, mai/juin 1985, pages 1125-1126, American Vacuum Society, Woodbury, New York, US; R.D. WATSON et al.: "Summary abstract: a review of experimental studies for the development of high heat flux materials and components"
THIN SOLID FILMS, vol. 83, no. 1, septembre 1981, pages 79-85, Elsevier Sequoia, Lausanne, CH; A.W. MULLENDORE et al.: "Thermal fatigue testing of coatings for fusion reactor applications"

(73) Titulaire : COMMUNAUTE EUROPEENNE DE L'ENERGIE ATOMIQUE (EURATOM)
Bâtiment Jean Monnet-DG XIII/A1 Plateau du Kirchberg
L-2920 Luxembourg (LU)

(72) Inventeur : Matera, Roberto
Via Marzorati, 121
I-21100 Varese (IT)

(74) Mandataire : Weinmiller, Jürgen
Lennéstrasse 9 Postfach 24
W-8133 Feldafing (DE)

## Description

L'invention se réfère à un diverteur-collecteur d'un réacteur nucléaire à fusion du type Tokamak, ce diverteur-collecteur étant composé d'une plaque de dissipation de chaleur et d'une couche de protection ionique qui recouvre ladite plaque et la protège contre le flux ionique régnant dans le réacteur.

Un diverteur-collecteur d'un réacteur du type Tokamak a pour fonction principale d'extraire des particules et de l'énergie thermique du plasma en vue de maintenir sa contamination à un niveau faible et de protéger la première paroi d'une chaleur excessive et d'un flux excessif de particules pendant la phase active. A ces fins, on prévoit une configuration "ouverte" des lignes magnétiques à au moins une extrémité de la section du torus. Les ions qui traversent une ligne séparatrice ainsi créée ne sont plus enfermés et sont interceptés par le diverteur-collecteur où ils sont neutralisés et extraits par pompage. Le diverteur-collecteur est disposé soit au sommet soit en bas de la chambre toroidale du plasma, soit aux deux endroits en même temps, et il est conçu pour dissiper la plus grande partie de l'énergie thermique produite dans le réacteur de fusion. En vue de limiter la densité d'énergie à une valeur raisonnable, les plaques du diverteur-collecteur sont disposées de façon inclinée par rapport à la ligne séparatrice. Si cet angle est faible, le flux thermique diminue, mais la taille de ces plaques augmente. Il faut donc trouver un compromis.

Les diverteurs-collecteurs proposés jusqu'ici pour un réacteur à fusion comportent une plaque de dissipation de chaleur à laquelle des tuiles de protection sont attachées mécaniquement ou soudées. La plaque de dissipation de chaleur a pour fonction de transférer l'énergie thermique à un circuit de refroidissement la parcourant, alors que les tuiles de protection ont pour but de résister au flux ionique avec une érosion aussi faible que possible. La plaque de dissipation de chaleur est donc réalisée en un matériau de conductivité thermique élevée et les tuiles sont faites d'un matériau résistant à l'érosion par les ions en question. Des matériaux qui ont été envisagés jusqu'ici pour la plaque de dissipation de chaleur sont le cuivre, des alliages de zirconium et de vanadium. Pour les tuiles de protection, on a proposé du graphite, du carbure de silicium, du beryllium, de l'oxide de beryllium, du tungstène, du molybdène, du tantale et des alliages de ces matériaux. Le point critique du diverteur est la jonction entre la plaque de dissipation de chaleur et les tuiles de protection.

Si la tuile est mécaniquement attachée à la plaque de dissipation de chaleur, le contact thermique est médiocre, et la température de la tuile augmente rapidement avec la puissance, étant donné que la seule voie effective de transmission de chaleur est constituée par la radiation. La limite de densité de puissance est imposée par la température de recristallisation du matériau de la tuile. Pour le tungstène, cette température se situe au-dessous de 1000°C. Pour le graphite, une température au-dessus de 1500°C provoque une augmentation notable de l'érosion par le flux ionique.

Si la tuile est soudée par brasage à la plaque de dissipation de chaleur, des contraintes thermiques très élevées se présentent à l'interface entre les deux matériaux dû aux coéfficients de dilatation thermique très différents. Un réacteur à fusion étant soumis à une opération pulsée, ces contraintes thermiques risquent de rompre la soudure, d'autant plus que toute imperfection de soudure constitue un point chaud et risque de se propager en opération pulsée du réacteur.

L'invention a pour but de proposer un diverteur-collecteur selon le préambule de la revendication 1, qui supporte mieux que les concepts actuels les conditions sévères de travail dans un réacteur à fusion.

Selon l'invention, ce but est atteint par le fait que la couche de protection ionique comporte une pluralité de fibres parallèles à base d'un matériau réfractaire tel que le graphite, le carbure de silicium, le beryllium, l'oxide de beryllium, le tungstène, le molybdène, le tantale et les alliages de ces matériaux, une partie de la longueur de ces fibres étant implantée dans le matériau de la plaque de dissipation, le restant de ces fibres s'étendant dans la couche de protection ionique.

De préférence, les fibres sont faites d'un alliage de tungstène et d'un matériau choisi parmi le rhénium, l'aluminium, le silicium et le thorium. Le diamètre des fibres est avantageusement inférieur à 250 µm et la densité d'implantation des fibres dans la plaque est de 100 à 10.000 par cm$^2$ de surface. Pour une protection efficace contre l'impact ionique, il est utile de disposer les fibres sur la surface de la plaque en lignes, les fibres de lignes adjacentes étant mutuellement décalées en quinconce.

Selon une réalisation préférée de l'invention, l'espace entre les fibres est rempli d'un liquide tel que le lithium, qui s'y maintient par des forces capillaires.

En variante, cet espace est rempli d'un matériau réfractaire, soit métallique, soit céramique, en particulier par du graphite.

En ce qui concerne des procédés de fabrication d'un diverteur-collecteur selon l'invention, référence est faite aux revendications correspondantes.

L'invention sera décrite ci-après plus en détail à l'aide des dessins annexés.

La fig. 1 représente schématiquement une coupe à travers un réacteur à fusion du type Tokamak, dans lequel l'invention trouve son application.

La fig. 2 montre schématiquement et en perspective une partie d'un diverteur-collecteur selon l'invention.

La fig. 3 montre une variante de la fig. 2 avec des fibres inclinées. Pour la simplicité des dessins, la densité des fibres est réduite.

La fig. 4 représente très schématiquement une autre variante d'un diverteur-collecteur selon l'invention, applicable surtout si la vitesse d'érosion est importante.

La fig. 5 représente une variante de la fig. 4.

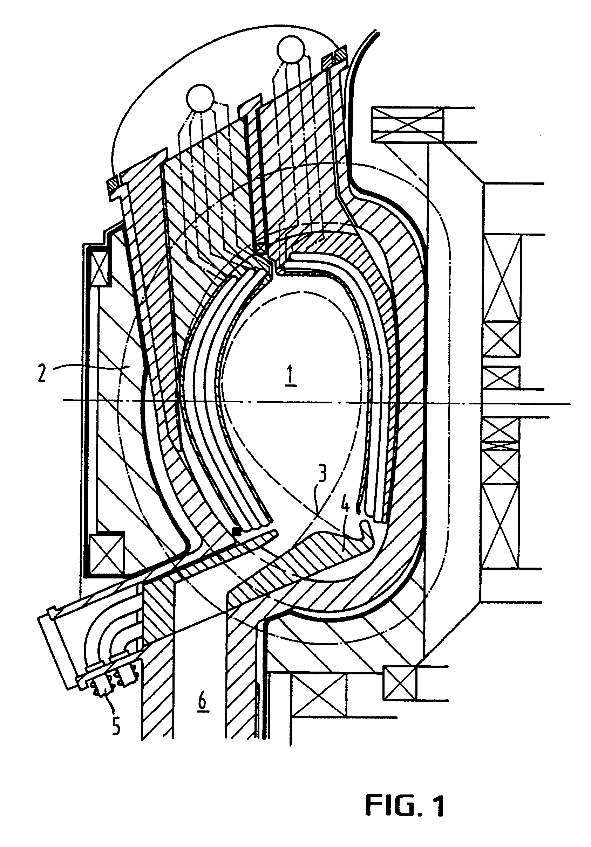

La fig. 1 est une vue en coupe à travers un réacteur à fusion du type Tokamak. La forme générale d'un tel réacteur est un torus, le plan de coupe de la fig. 1 incluant l'axe du torus. Une chambre de réaction 1 contient un plasma, qui est enfermé par des champs magnétiques créés par des bobines telles que 2. Comme il a été décrit ci-dessus, les lignes du champs magnétique ne sont pas totalement fermées. Dans l'exemple choisi ici, il y a un point séparateur 3 au-delà duquel les ions sont libérés et interceptent une plaque de diverteur-collecteur 4. Le diverteur-collecteur est relié à un circuit 5 de refroidissement, qui extrait la chaleur de cet élément. Les particules ionisées frappant le diverteur-collecteur y sont neutralisées et sont extraites par un canal 6 vers une pompe.

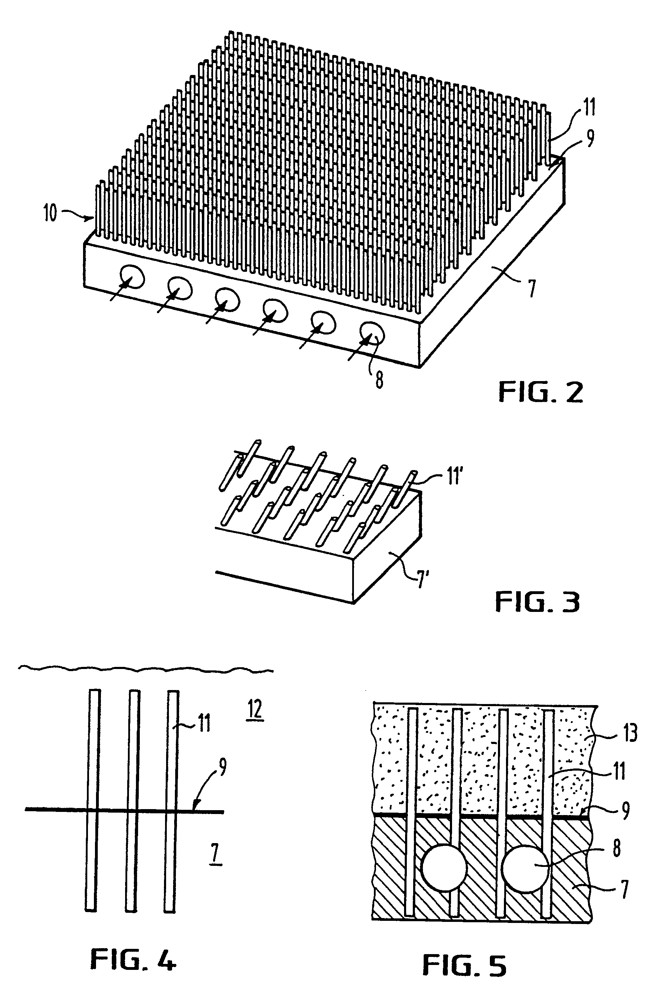

Pour la présente invention, qui ne se réfère qu'au diverteur-collecteur 4, cette description sommaire du réacteur est suffisante. La fig. 2 montre une partie décrochée du diverteur-collecteur 4, qui comporte une plaque de dissipation de chaleur 7 traversée par des canaux 8 reliés au circuit de refroidissement 5. La surface 9 de cette plaque en regard de la chambre de réaction est recouverte d'une couche de protection ionique 10, qui est constituée d'une brosse de fibres telles que 11 en tungstène ou un autre matériau réfractaire.

Comme on le voit sur la fig. 2, ces fibres sont réparties régulièrement en lignes sur la surface 9, les fibres d'une ligne étant en quinconce par rapport aux fibres de la ligne suivante. La densité des fibres est en réalité plus grande que celle représentée sur la fig. 2. Il faut, en effet, choisir une telle densité que la probabilité d'incidence de ions sur la plaque 7 soit suffisamment faible.

Comme il ressort de la fig. 1, on choisit une certaine inclinaison de la surface 9, de sorte que le flux thermique dû à l'impact des ions soit aussi faible que possible. Il peut en outre être utile d'implanter les fibres 11' dans la plaque de dissipation de chaleur 7' non perpendiculairement, comme il est représenté sur la fig. 2, main obliquement tel que représente sur la fig. 3.

L'invention telle que décrite ci-dessus a des avantages multiples par rapport à une tuile attachée à ou soudée sur une plaque de dissipation de chaleur. Il est évident que même si une partie de la surface de chaque fibre n'est pas exposée au faisceau ionique, la fraction de la surface des fibres réellement exposée aux ions est nettement plus grande que celle d'une surface massive. De ce fait, la densité locale de puissance est réduite notablement, sans que les dimensions du diverteur-collecteur soient augmentées.

Un autre avantage réside dans la différence de contraintes de traction et de modules d'élasticité entre un matériau fibreux et le même matériau sous forme massive, car il est bien connu de la technologie des matériaux composites qu'un solide sous forme de fibre de faible diamètre a des propriétés mécaniques bien plus élevées qu'en forme massive.

L'avantage principal de l'invention concerne l'interface entre le tungstène et le cuivre :

Considérons une fibre qui est implantée pour une longueur notable dans la matrice de cuivre de la plaque de dissipation de chaleur. La distribution de la température le long de la fibre décroît rapidement entre son sommet libre et la surface de la plaque en cuivre. D'ailleurs, le choix de la distance entre cette surface et l'extrémité libre de la fibre est conditionné par la température au sommet, qui ne doit jamais dépasser la température de recristallisation de la fibre. Du moment où la fibre entre dans le cuivre, la chaleur est dissipée dans le cuivre à travers l'interface cylindrique avec la fibre. Si la liaison entre la fibre et le cuivre ne constitue pas une barrière thermique, la différence de température entre la fibre et le cuivre décroît rapidement et la zone de contrainte thermique élevée est très limitée par rapport à la totalité de l'interface entre fibre et cuivre. Un défaut provenant de la fabrication ou de la fatigue thermique due à l'opération impulsionnelle du réacteur ne peut donc pas se propager en profondeur de la plaque de cuivre. De toute façon, un tel défaut reste limité à la fibre concernée et ne peut pas affecter la fonction du diverteur-collecteur dans sa totalité.

Au niveau de la plaque de dissipation de chaleur, la présence d'une dispersion de fibres est susceptible de rigidifier le cuivre par un mécanisme de durcissement par fibres qui est très peu sensible à la température et à sa variation. En outre, les propriétés physiques, en particulier la conductivité thermique, sont peu affectés par la présence des fibres dans la matrice de cuivre.

Un procédé de fabrication d'un diverteur-collecteur selon l'invention peut comporter une première étape, pendant laquelle on recouvre les fibres, au moins sur la partie de leur longueur qui doit être implantée dans la plaque de cuivre, par une couche de cuivre ; une deuxième étape consiste alors à comprimer le faisceau des fibres isostatiquement et à une température permettant la fusion ou le frittage du cuivre et la constitution de la plaque.

Un autre procédé de fabrication d'un diverteur-collecteur peut être constitué par une infiltration du cuivre liquide dans un faisceau de fibres de tungstène.

Dans le cadre de l'invention, le diverteur-collecteur, dans le cas où la vitesse d'érosion est importante, peut être recouvert d'une couche de métal liquide tel que le lithium, qui est capable de supporter des charges thermiques très élevées. La présence des fibres réduit dans ce cas les instabilités hydrodynamiques de la couche liquide grâce à des forces capillaires retenant le liquide. Cette possibilité est esquissée dans la fig. 4, où on voit la plaque de cuivre 7, la surface 9 de cette plaque et les fibres 11 faisant saillie de cette surface. Une couche de lithium 12 est retenue par des forces de capillarité entre les fibres.

On sait que la température de recristallisation du tungstène peut être élevée par une alliage du tungstène avec du rhenium, aluminium, silicium ou thorium. Cela permet en contrepartie d'allonger la longueur libre de la fibre et ainsi de perfectionner la protection ionique de la plaque de dissipation.

Dans un exemple réel, les fibres ont un diamètre d'environ 10 μm et une longueur totale de 3 mm, dont 1 mm comme longueur libre hors de la plaque de dissipation 7. La densité des fibres par cm² est choisie entre 100 et 10.000, de préférence à 4.000.

Encore une autre variante est représentée sur la fig. 5. Il s'agit d'un diverteur-collecteur qui ne se distingue de celui selon la fig. 4 que par le fait que l'espace entre les fibres est rempli par une matrice 13 en graphite au lieu du lithium liquide. La couche de protection ionique est donc constituée d'un composite graphite-fibres de carbone. L'accouplement mécanique et thermique entre la plaque de dissipation 7 et ladite couche est assuré par les fibres 11, qui sont enterrées d'une part dans le cuivre de la plaque 7 et d'autre part dans la matrice 13 en graphite.

Un faisceau de fibres est d'abord dispersé dans une résine thermo-durcissable pour une longueur correspondant à celle de la couche de protection. Après polymérisation de la résine, on procède à une carbonisation et ensuite à une graphitation de la résine. Puis, on applique aux fibres sortant de cet ensemble le processus décrit ci-dessus d'implantation dans du cuivre. Le résultat final est un double composite cuivre-fibres et graphite-fibres. Si la fraction de la surface 9 couverte par les fibres peut atteindre 60%, il y a un transfert thermique élevé par conduction, auquel il faut ajouter la transmission de chaleur par rayonnement entre cuivre et graphite et celle par conduction à travers le contact entre cuivre et graphite.

L'invention n'est pas limitée aux exemples de réalisation décrits ci-dessus. On peut, sans sortir du cadre de l'invention, remplacer le cuivre par un autre matériau bon conducteur de chaleur tel que des alliages zirconium ou de vanadium ou d'autres matériaux réfractaires.

## Revendications

1. Diverteur-collecteur d'un réacteur nucléaire à fusion du type Tokamak, ce diverteur-collecteur étant composé d'une plaque de dissipation de chaleur (7) et d'une couche de protection ionique (10), qui recouvre ladite plaque et la protège contre le flux ionique régnant dans le réacteur, caractérisé en ce que la couche de protection ionique (10), comporte une pluralité de fibres parallèles (11) à base d'un matériau réfractaire tel que le graphite, le carbure de silicium, le beryllium, l'oxide de beryllium, le tungstène, le molybdène, le tantale et les alliages de ces matériaux, une partie de la longueur de ces fibres étant implantée dans le matériau (9) de la plaque (7) de dissipation, le restant de ces fibres s'étendant dans la couche de protection ionique.

2. Diverteur-collecteur selon la revendication 1, caractérisé en ce que les fibres sont faites d'un alliage de tungstène et d'un matériau choisi parmi le rhenium, l'aluminium, le silicium et le thorium.

3. Diverteur-collecteur selon l'une des revendications précédentes, caractérisé en ce que le diamètre des fibres est inférieur à 250 μm, de préférence inférieure à 50 μm.

4. Diverteur-collecteur selon l'une des revendications précédentes, caractérisé en ce que la densité d'implantation des fibres (11) dans ladite plaque (7) est de 100 à 10.000 par cm² de la surface (9).

5. Diverteur-collecteur selon l'une des revendications précédentes, caractérisé en ce que les fibres (11) sont disposées en lignes sur la surface de ladite plaque, les fibres des lignes adjacentes étant mutuellement décalées en quinconce.

6. Procédé de fabrication d'un diverteur-collecteur selon l'une des revendications précédentes, caractérisé en ce qu'on recouvre d'abord les fibres, au moins sur la partie de leur longueur qui doit être implantée dans la plaque, par une couche de matériau de la plaque, et on les comprime ensuite isostatiquement et à une température permettant la fusion dudit matériau et la constitution de la plaque.

7. Procédé de fabrication d'un diverteur-collecteur selon l'une des revendications 1 à 5, caractérisé en ce qu'on arrange d'abord les fibres en un faisceau et l'on fait ensuite infiltrer en phase liquide le matériau de la plaque dans ledit faisceau.

8. Diverteur-collecteur selon l'une des revendications 1 à 5, caractérisé en ce que dans la couche de protection ionique, l'espace entre les fibres (11) est rempli d'un liquide (12) qui s'y maintient par des forces capillaires.

9. Diverteur-collecteur selon l'une des revendications 1 à 5, caractérisé en ce que, dans la couche de protection ionique, l'espace entre les fibres (11) est rempli d'un matériau réfractaire, soit métallique, soit céramique.

10. Diverteur-collecteur selon la revendication 9, caractérisé en ce que le matériau réfractaire remplissant l'espace entre les fibres dans la couche de protection ionique est du graphite.

## Ansprüche

1. Divertor-Kollektor für einen Kernfusionsreaktor vom Tokamaktyp, bestehend aus einer Wärmeabfuhrplatte (7) und einer Ionenschutzschicht (10), welche die Platte bedeckt und gegen den im Reaktor herrschenden Ionenfluß schützt, dadurch gekennzeichnet, daß die Ionenschutzschicht (10) eine Vielzahl von parallelen Fasern (11) auf Basis feuerfesten Materials wie Graphit, Siliziumkarbid, Beryllium, Berylliumoxid, Wolfram, Molybdän, Tantal und den Legierungen dieser Materialien aufweist, wobei ein Teil der Länge der Fasern in das Material (9) der Abfuhrplatte (7) eingebettet ist, während sich der übrige Teil der Fasern in die Ionenschutzschicht erstreckt.

2. Divertor-Kollektor nach Anspruch 1, dadurch gekennzeichnet, daß die Fasern aus einer Legierung aus Wolfram und einem Material aus der Gruppe Rhenium, Aluminium, Silizium und Thorium hergestellt sind.

3. Divertor-Kollektor nach einem der vorhergehenden Ansprüche, dadurch gekennzeichnet, daß der Durchmesser der Fasern kleiner als 250 μm, vorzugsweise kleiner als 50 μm ist.

4. Divertor-Kollektor nach einem der vorhergehenden Ansprüche, dadurch gekennzeichnet, daß die Implantationsdichte der Fasern (11) in der Platte (7) zwischen 100 und 10.000 Fasern pro cm² Oberfläche (9) beträgt.

5. Divertor-Kollektor nach einem der vorhergehenden Ansprüche, dadurch gekennzeichnet, daß die Fasern (11) zeilenförmig auf der Oberfläche der Platte angeordnet sind, wobei die Fasern benachbarter Zeilen auf Lücke stehend versetzt sind.

6. Verfahren zur Herstellung eines Divertor-Kollektors nach einem der vorhergehenden Ansprüche, dadurch gekennzeichnet, daß die Fasern zunächst mit einer Schicht aus dem Material der Platte überzogen werden, und zwar zumindest in jenem Abschnitt ihrer Länge, der in die Platte eingebette werden soll, und daß die Fasern anschließend isostatisch und bei einer Temperatur verdichtet werden, welche das Schmelzen des genannten Materials und den Aufbau der Platte gestattet.

7. Verfahren zur Herstellung eines Divertor-Kollektors nach einem der Ansprüche 1 bis 5, dadurch gekennzeichnet, daß die Fasern zunächst in ein Bündel gebracht werden, und daß anschließend das Material der Platte in flüssiger Phase in das Bündel infiltriert wird.

8. Divertor-Kollektor nach einem der Ansprüche 1 bis 5, dadurch gekennzeichnet, daß in der Ionenschutzschicht der Raum zwischen den Fasern (11) mit einer Flüssigkeit (12) gefüllt ist, die sich dort durch. Kapillarkräfte hält.

9. Divertor-Kollektor nach einem der Ansprüche 1 bis 5, dadurch gekennzeichnet, daß in der Ionenschutzschicht der Raum zwischen den Fasern (11) mit einem feuerfesten Material, das metallisch oder keramisch ist, gefüllt wird.

10. Divertor-Kollektor nach Anspruch 9, dadurch gekennzeichnet, daß das feuerfeste Material, das den Raum zwischen den Fasern in der Ionenschutzschicht füllt, aus Graphit besteht.

## Claims

1. A diverter-collector of a Tokamak nuclear fusion reactor, the diverter-collector being composed of a heat dissipation plate (7) and of an ion protection layer (10), which covers said plate and protects it against the ion flux present in the reactor, characterized in that the ion protection layer (10) comprises a plurality of parallel fibers (11) based on a refractory material such as graphite, silicon carbide, beryllium, beryllium oxide, tungsten, molybdenum, tantalum and the alloys of said materials, with one part of the length of said fibers being embedded into the material (9) of the dissipation plate (7), whereas the remainder of the fibers extends within the ion protection layer.

2. A diverter-collector according to claim 1, characterized in that the fibers are made of an alloy of tungsten and of a material chosen among rhenium, aluminium, silicon and thorium.

3. A diverter-collector according to anyone of the preceding claims, characterized in that the diameter of the fibers is smaller than 250 μm, preferably smaller than 50 μm.

4. A diverter-collector according to anyone of the preceding claims, characterized in that the density of implantation of the fibers (11) within said plate (7) ranges between 100 and 10 000 per cm² of the surface (9).

5. A diverter-collector according to anyone of the preceding claims, characterized in that the fibers are disposed lengthwise across the surface of said plate, with the fibers of the adjacent lines being mutually offset.

6. A method of manufacture of a diverter-collector according to anyone of the preceding claims, characterized in that the fibers are initially coated by a layer of the plate material, at least over that part of their length which is to be embedded into the copper plate, and that the fibers are then compressed isostatically and at a temperature allowing for the fusion of said material and for the constitution of the plate.

7. A method of manufacture of a diverter-collector according to anyone of the preceding claims 1 to 5, characterized in that the fibers are firstly arranged in a beam, and that subsequently the material of the plate is infiltrated in liquid phase into said beam.

8. A diverter-collector according to anyone of the claims 1 to 5, characterized in that in the ion protection layer the space between the fibers (11) is filled with a liquid (12) capable of remaining therein by the action of capillary forces.

9. A diverter-collector according to anyone of the claims 1 to 5, characterized in that in the ion protection layer the space between the fibers (11) is filled with a refractory material, either a metallic or a ceramic one.

10. A diverter-collector according to claim 9, characterized in that the refractory material filling the space between the fibers in the ion protection layer is graphite.

FIG. 1

FIG. 2

FIG. 3

FIG. 4

FIG. 5